# FASCICULE DE BREVET EUROPEEN

(11) **EP 4 040 061 B1**
(45) Date de publication et mention de la délivrance du brevet: **09.04.2025**
(21) Numéro de dépôt: 22154926.4
(22) Date de dépôt: 03.02.2022
(51) Int. Cl.: F24F 11/00, F24F 13/14, F24F 13/10

(54) **CLAPET BISTABLE**
BISTABILES VENTIL
BISTABLE VALVE

(30) Priorité: 05.02.2021 FR 2101105
(43) Date de publication de la demande: 10.08.2022
(73) Titulaire: BHG, 68100 Mulhouse (FR)
(72) Inventeur: BIRKER, Arnaud, 68440 DIETWILLER (FR); FRITSCH, Thomas, 67800 HOENHEIM (FR); GIORDANO, Nicolas, 74960 Cran-Gevrier (FR)
(74) Mandataire: Cabinet Bleger-Rhein-Poupon

(56) Documents cités:
- EP-A1- 3 396 267
- WO-A1-2012/107902
- WO-A1-2019/141934
- FR-A1- 2 648 891
- FR-A1- 3 014 175
- US-A1- 2008 178 526
- US-A1- 2018 119 970
- US-A1- 2019 212 023
- US-A1- 2019 376 704
- US-A1- 2019 376 720

## Description

La présente invention s'inscrit dans le domaine de la gestion d'ouvertures de ventilation dans les bâtiments. Ces ouvertures gèrent le passage d'air entre l'extérieur et l'intérieur du bâtiment, et peuvent être pratiquées dans les murs, dans les menuiseries des portes et fenêtres ou encore, lorsque ces derniers en sont équipés, dans les caissons et coffres des volets roulants.

La ventilation des espaces résidentiels relève à présent d'une exigence normative, impliquant la mise en œuvre de circuits de circulation d'air dans les locaux d'habitation en vue d'améliorer la qualité de l'air respiré. Les débits échangés entre l'extérieur et les volumes intérieurs des pièces sont modifiables et contrôlables, impliquant la mise en place de moyens de gestion de la surface de passage de l'air. Des trappes ou clapets sont placés à cet effet devant les ouvertures, dont le déplacement aboutit à modifier le débit d'air traversant, selon le sens du mouvement qui leur est imprimé.

Leur déplacement peut être assujetti à la mesure de paramètres comme par exemple le degré d'hygrométrie. Il existe ainsi des bouches d'aération hygro-réglables basées sur des fibres qui réagissent à l'humidité en se déformant selon le degré d'hygrométrie et sont combinées à des moyens d'obturation de la bouche. Le montage est configuré de sorte que les fibres puissent exercer une action mécanique sur les moyens d'obturation pour augmenter le débit d'air entrant à mesure que l'hygrométrie augmente. Mais cette solution présente plusieurs limitations : d'abord, le temps de réaction est lent, ensuite le seul paramètre géré est le degré d'hygrométrie, et enfin le fonctionnement est proportionnel à l'humidité mesurée. Il ne permet donc pas de fonctionnement non proportionnel.

Néanmoins, l'ajustement de la quantité d'air échangé s'effectue de manière automatisée, ce qui est considéré comme un progrès par rapport à la commande manuelle. Dans d'autres configurations connues à ce jour, l'automatisation résulte de l'emploi d'un moteur, le clapet mobile devant l'ouverture étant motorisé, et les moyens de motorisation pilotables. Cette solution est plus souple en ce qu'elle peut permettre la gestion de plusieurs paramètres, pas seulement le taux d'humidité. Il est à noter qu'à l'heure de la domotique et des maisons connectées, la motorisation des éléments mobiles de contrôle de paramètres de confort de l'habitat devient la règle. L'utilisateur dispose alors de moyens de commande et de paramétrage qu'il peut gérer en fonction des paramètres contrôlés par le système, dans un but d'optimisation à l'environnement réel.

Jusqu'ici, la motorisation des clapets de gestion de la ventilation s'effectue en général par des petits moteurs électriques en prise mécanique avec le clapet pour le déplacer. La plupart des clapets sont montés pivotants devant les ouvertures, et pilotés pour être mobiles selon une course prédéterminée. Dans l'hypothèse d'une possibilité de gestion continue de la variation du débit d'air, les moyens moteurs sont commandés pour faire tourner le clapet d'un angle sélectionné par l'utilisateur, ou pilotés par une unité électronique de traitement en fonction des signaux reçus des capteurs.

L'idée à la base de la présente invention est de réduire considérablement la complexité des moyens moteurs, et de proposer par conséquent un mécanisme d'entraînement apte à répondre de manière simplifiée à une commande émanant d'un utilisateur ou du système. Parmi les objectifs poursuivis et les résultats concrets attendus : simplifier la commande des moyens moteurs, et rendre les opérations de maintenance également plus simples.

A ces effets, le dispositif à clapet de l'invention, permettant comme mentionné la régulation du débit d'air dans une ouverture de passage de l'air pratiquée dans une paroi, et comportant un clapet disposé sur une face de la paroi au débouché de l'ouverture et mobile entre deux positions par rapport à ladite ouverture, une position d'obturation de l'ouverture et une position de passage de flux d'air, est tel qu'il comporte des moyens d'entraînement du clapet associés à des moyens de guidage de son déplacement comportant une zone de bascule entre deux positions stables en butée correspondant aux deux positions d'obturation de l'ouverture et de passage de flux d'air, et en ce que lesdits moyens d'entraînement comportent au moins deux fils souples en alliage à mémoire de forme. Selon l'invention, lesdits fils se contractent lorsqu'ils sont chauffés et se dilatent en refroidissant, au moins un premier fil étant fixé entre un côté du clapet et la paroi ou un élément solidaire de la paroi et au moins un second fil étant fixé entre l'autre côté du clapet et la paroi ou un élément solidaire de la paroi, au moins le premier fil exerçant sur le clapet une action de sens opposé à l'action exercée par au moins le second fil, chaque fil étant soumis à des moyens de chauffage reliés à une unité de contrôle électronique apte à activer alternativement les moyens de chauffage d'au moins le premier fil ou les moyens de chauffage d'au moins le second fil.

Par obturation, on entend soit une obturation totale, soit une obturation partielle permettant un passage minimal d'air permettant de satisfaire aux normes en vigueur. Le premier vecteur de simplification de l'invention réside par conséquent dans une limitation des possibilités de commande du déplacement du clapet : il n'existe plus de possibilité de réglage continu entre deux positions extrêmes d'ouverture maximale et de fermeture. Le fonctionnement est bistable. Le clapet est « motorisé » de telle sorte que la commande lui permette simplement de changer de position.

Les alliages à mémoire de forme (AMF) sont des matériaux métalliques qui présentent des propriétés thermomécaniques particulières. Ils sont en effet et notamment caractérisés par un effet mémoire de forme, pouvant d'ailleurs être à simple sens ou à double sens selon les alliages utilisés. Des matériaux à mémoire de forme ont déjà été utilisés pour déplacer des clapets, comme dans le document FR 2648891A1, dans lequel les éléments à mémoire de forme peuvent adopter deux formes rigides distinctes selon la température qui leur est appliquée. La solution présentée, qui date des années 1980, est conforme à une approche de type bilame que l'on avait des éléments à mémoire de forme à cette époque : on utilisait la déformation de matériaux solides rigides sous l'effet des variations de température qui leur donnaient deux configurations rigides distinctes, le changement de forme de la pièce continûment rigide étant utilisé pour contrôler un mécanisme d'entraînement du clapet.

L'approche de l'invention est très différente : les éléments à mémoire de forme ne comportent pas de changement de forme à l'état rigide, ensuite transmissible mécaniquement à un organe. Lorsqu'ils sont chauffés, les fils se contentent d'exercer une action initiale de traction pour tirer le clapet, auquel ils sont directement reliés, chacun dans un seul sens (chaque fil ou groupe de fils à mémoire de forme est en charge d'un sens de déplacement du clapet), puis les moyens de guidage mécanique du déplacement du clapet dotés d'une zone de bascule terminent ledit déplacement, de manière purement mécanique. Le fil étant souple, il ne s'oppose pas à la poursuite mécanique du trajet induite par les moyens de guidage.

Lorsque l'alliage refroidit, une déformation du ou des fils impliqués dans le déplacement précédent se produit, dans le sens inverse de celui de la phase de chauffage : après s'être contracté(s), le ou les fils se dilate(nt). Du fait de la souplesse du fil, cette dilatation n'a cependant aucun effet sur le clapet, qui est maintenu dans une position stable en butée par le système mécanique à zone de bascule. La souplesse du fil explique notamment l'absence d'effet mécanique sur la position du clapet lorsque le fil, en refroidissant, reprend sa configuration initiale.

Le système de l'invention, comme on l'a mentionné, est un mécanisme bistable qui doit être actif dans deux sens opposés, d'où l'utilisation d'au moins deux fils d'alliage qui exercent des actions opposées sur le clapet en étant fixés à deux côtés opposés du clapet.

En pratique, lorsque l'on chauffe l'alliage, on active l'effet mémoire de forme, ce qui entraîne une déformation du fil, qui va - dans l'exemple de l'invention - dans le sens d'une contraction de l'ordre de 3% à 4%. Lorsque l'alliage est refroidi, si l'alliage choisi est à mémoire de forme à double sens, une déformation dans le sens inverse de celui de la phase de chauffage se produit, c'est-à-dire une dilatation du fil. Cela n'a cependant plus d'effet sur le clapet, qui est maintenu dans une position stable par le système mécanique à point ou zone de bascule associé aux fils d'alliage.

L'activation séparée et séquentielle_des moyens de chauffage des deux fils garantit qu'une unique action, dans un seul sens, est exercée sur le clapet lors d'une commande pour le faire changer de position. En d'autres termes, les moyens de commande n'actionnent le « moteur » constitué des fils d'alliage qu'alternativement, soit celui/ceux qui est/sont disposé(s) d'un côté du clapet, soit celui/ceux disposé(s) de l'autre côté du clapet.

Dans l'invention, le fait que le ou les fils souples en alliage est/sont le composant principal des moyens mécaniques d'entraînement du clapet constitue une simplification considérable du mécanisme qui réalise les déplacements du clapet. Il suffit d'un fil de chaque côté du clapet, dont la longueur est calculée pour qu'il puisse être tendu par chauffage lorsque le clapet est en butée, puis que la contraction due au chauffage puisse entraîner le clapet jusqu'après la zone de bascule. Avec des éléments à mémoire de forme de type bilame comme qui sont divulgués dans FR 2648891A1, la structure mécanique est complexe, car la déformation qui permet de passer d'une première forme rigide à une seconde forme rigide de l'élément à mémoire de forme doit ensuite être répercutée à un mécanisme dont le déplacement doit être contrôlé. L'énergie mécanique est dans ce cas conférée par les changements de forme de l'élément rigide à mémoire de forme.

Plus précisément, dans l'invention, la contraction du ou des fils fixés d'un côté du clapet est apte à entraîner ce dernier depuis sa position en butée du côté opposé du clapet à au moins un point de franchissement de la zone de bascule. Il n'y a pas besoin d'aller plus loin, ce qui est une autre simplification par rapport à la solution de FR 2648891A1, dans laquelle la déformation continue du bilame accompagne la totalité du trajet du clapet. Le point de franchissement peut être situé, dans le trajet effectué dans le sens du déplacement, juste après la zone de bascule.

Par ailleurs, dans les solutions qui relèvent de l'invention, pour gérer le chauffage, les moyens d'entraînement sont reliés à une unité de contrôle électronique pilotant les moyens de chauffage.

Plus précisément, selon l'invention, l'unité de contrôle électronique comporte :
- une alimentation en courant continu reliée aux fils en alliage à mémoire de forme via des moyens de commutation, lesdits moyens de commutation comportant au moins un état ouvert, un état de connexion de l'alimentation à au moins le premier fil et un état de connexion de l'alimentation à au moins le second fil, et
- des moyens de pilotage de l'état des moyens de commutation,
le passage du courant dans les fils constituant les moyens de chauffage.

En fait, le ou les fils en alliage à mémoire de forme constituant à la fois le système mécanique et le système de chauffage, la solution de l'invention est simplifiée à l'extrême.

Très concrètement, par rapport à la solution de l'art antérieur à commande par moteur électrique, on remplace les fils électriques d'alimentation du moteur par un ou plusieurs fils en alliage à mémoire de forme, que l'on connecte à l'alimentation via les moyens de commutation, en faisant dès lors l'économie du moteur puisque ce sont les fils eux-mêmes qui constituent les moyens d'entraînement moteurs du déplacement du clapet. Les moyens de commutation connectant l'alimentation à un fil ou groupe de fils exerçant une action dans un sens ne sont commandés pour chauffer le ou lesdits fils que lorsqu'un changement de position du clapet est voulu. Lorsque la position stable du clapet est atteinte, les moyens de commutation sont placés par l'unité de contrôle dans leur état ouvert, et le système ne consomme donc plus rien.

Les clapets présentent généralement une structure de type paroi mince mobile à deux grands côtés parallèles, sur lesquels les fils sont attachés de manière à pouvoir exercer des actions opposées. Leur fixation au reste de la structure comportant une ouverture à obturer est réalisée de manière telle que lors de la contraction, les fils sont orientés de sorte à exercer un effort avec une composante d'allure perpendiculaire auxdits grands côtés, apte à entraîner le clapet.

La commande de l'alimentation des fils d'alliage peut d'ailleurs être pilotée sur la base de divers paramètres, pris seuls ou en combinaison et gérés par l'unité de contrôle électronique. Celle-ci peut donc être reliée à au moins un capteur détectant l'évolution d'un paramètre utilisé pour la commande du clapet.

Les moyens de guidage à zone de bascule sont une solution pour rendre le mécanisme bistable, c'est-à-dire stable en deux positions.

Le fonctionnement est le suivant : pour modifier la position du clapet, on chauffe le ou les fils en alliage à mémoire de forme qui exercent une action apte à modifier la position actuelle du clapet, qui se contracte(nt) et tire(nt) le clapet. En l'absence de chauffage, lorsque les moyens de commutation sont placés en leur état ouvert, le ou les fils refroidissent, et les moyens de guidage maintiennent le clapet basculé en sa nouvelle position stable.

Les signaux de commande du changement de position du clapet, dans la configuration de l'unité de contrôle de l'invention, sont utilisés pour actionner les moyens de commutation dans le sens de la fermeture puis de l'ouverture du circuit reliant d'une part le ou les fils en alliage à mémoire de forme correspondant au sens de l'action requise et d'autre part l'alimentation à courant continu. Comme indiqué auparavant, ces signaux peuvent provenir de capteurs mesurant divers phénomènes physiques et/ou environnementaux, comme par exemple la pollution de l'air, et ne sont nullement limités à la mesure de l'hygrométrie. La mesure de plusieurs paramètres peut être combinée par l'unité de contrôle, qui les traite et actionne le déplacement du clapet en fonction des résultats du traitement.

Après connexion, le courant passe et chauffe le ou les fils d'alliage connecté(s), entraînant leur contraction et produisant un effort de traction sur le clapet. A l'ouverture, après bascule mécanique, le ou les fils refroidissent et se détendent, reprenant la forme mémorisée caractéristique de leur état froid.

Les moyens de guidage du dispositif à clapet de l'invention comportent par ailleurs deux butées délimitant l'amplitude du déplacement. Ces moyens de guidage sont nécessaires pour transformer l'effort résultant des moyens d'entraînement - en l'occurrence le ou les fils en alliage - qui ne sont directionnellement pas précis, en un trajet du clapet maîtrisé, la bascule mécanique permettant la maîtrise de la bi-stabilité positionnelle du clapet. Selon une possibilité, le dispositif peut aussi présenter des moyens de réglage de la position d'au moins une des butées, en vue d'ajuster le trajet du clapet si nécessaire.

Selon une configuration possible, le clapet peut comporter un support rigide coopérant avec un film de dimensions aptes à obstruer l'ouverture dans la paroi, ledit film étant déplaçable indépendamment dudit support entre une position au contact du support et une position d'obstruction de l'ouverture. Ce film permet d'ajouter une fonction de blocage du flux d'air dans un sens, pour empêcher que des phénomènes parasites non contrôlables du type rafales de vent ne perturbent la gestion contrôlée des flux. La solution intègre en somme dans ce cas, en une unique solution, le contrôle du débit et une fonction anti-retour.

Ce film, de préférence, est réalisé en matériau flexible. Le caractère flexible le rend mobile, sous l'effet des différentiels de pression existant d'un côté à l'autre de l'ouverture, entre une position au contact de la paroi, et une position au contact du support. Il est donc déplacé par l'existence de pressions différenciées, la nature flexible et légère du film ne nécessitant pas de moyens additionnels d'entraînement.

L'invention permet en somme de déplacer le clapet sans recourir à un moteur, ce qui simplifie considérablement aussi bien l'électronique de commande que les moyens d'entraînement proprement dits. De fait, ces deux ensembles se réduisent à présent à un circuit lui-même extrêmement simple, puisque comportant essentiellement une alimentation, un organe de commutation et le ou les fils en alliage à mémoire de forme.

Sur un plan mécanique, il faut simplement que les fils soient placés entre le clapet et un élément fixe ou fixé à la paroi dans laquelle est pratiquée l'ouverture. Comme pour les solutions à moteur, cependant, et malgré son extrême simplicité, l'invention permet une commande automatisée en réponse à divers paramètres.

## Revendications

1. Dispositif à clapet pour la régulation du débit d'air dans une ouverture de passage de l'air pratiquée dans une paroi, comportant un clapet disposé sur une face de la paroi au débouché de l'ouverture, mobile entre deux positions par rapport à l'ouverture, une position d'obturation de l'ouverture et une position de passage de flux d'air, **caractérisé en ce qu'**il comporte des moyens d'entraînement du clapet associés à des moyens de guidage de son déplacement comportant une zone de bascule entre deux positions stables en butée correspondant aux deux positions d'obturation de l'ouverture et de passage de flux d'air, et **en ce que** lesdits moyens d'entraînement comportent au moins deux fils souples en alliage à mémoire de forme, lesdits fils se contractant lorsqu'ils sont chauffés et se dilatant en refroidissant, au moins un premier fil étant fixé entre un côté du clapet et la paroi ou un élément solidaire de la paroi et au moins un second fil étant fixé entre l'autre côté du clapet et la paroi ou un élément solidaire de la paroi, au moins le premier fil exerçant sur le clapet une action de sens opposé à l'action exercée par au moins le second fil, chaque fil étant soumis à des moyens de chauffage reliés à une unité de contrôle électronique apte à activer alternativement les moyens de chauffage d'au moins le premier fil ou les moyens de chauffage d'au moins le second fil.

2. Dispositif à clapet pour le contrôle du passage de l'air dans une ouverture selon la revendication précédente, **caractérisé en ce que** la contraction du ou des fils fixés d'un côté du clapet est apte à entraîner ce dernier depuis sa position en butée du côté opposé du clapet à au moins un point de franchissement de la zone de bascule.

3. Dispositif à clapet pour le contrôle du passage de l'air dans une ouverture selon l'une des revendications précédentes, **caractérisé en ce que** l'unité de contrôle électronique comporte :
- une alimentation en courant continu reliée aux fils en alliage à mémoire de forme via des moyens de commutation, lesdits moyens de commutation comportant au moins un état ouvert, un état de connexion de l'alimentation à au moins le premier fil et un état de connexion de l'alimentation à au moins le second fil, et
- des moyens de pilotage de l'état des moyens de commutation,
le passage du courant dans les fils constituant les moyens de chauffage.

4. Dispositif à clapet pour le contrôle du passage de l'air dans une ouverture selon l'une des revendications précédentes, **caractérisé en ce que** l'unité de contrôle électronique est reliée à au moins un capteur détectant l'évolution d'un paramètre utilisé pour la commande du clapet.

5. Dispositif à clapet pour la régulation du débit d'air dans une ouverture selon l'une quelconque des revendications précédentes, **caractérisé en ce que** les moyens de guidage du clapet comportent deux butées délimitant l'amplitude du déplacement.

6. Dispositif à clapet pour la régulation du débit d'air dans une ouverture selon la revendication précédente, **caractérisé en ce qu'**il comporte des moyens de réglage de la position d'au moins une des butées.

7. Dispositif à clapet pour la régulation du débit d'air dans une ouverture selon l'une des revendications précédentes, **caractérisé en ce que** ledit clapet comporte un support rigide coopérant avec un film de dimensions aptes à obstruer l'ouverture dans la paroi, ledit film étant déplaçable indépendamment dudit support entre une position au contact du support et une position d'obstruction de l'ouverture.

8. Dispositif à clapet pour le contrôle du passage de l'air dans une ouverture selon la revendication précédente, **caractérisé en ce que** le film est réalisé en matériau flexible.

## Patentansprüche

1. Ventilvorrichtung zum Regulieren der Luftströmung in einer Luftdurchlassöffnung, die in einer Wand ausgeführt ist, umfassend ein Ventil, das an einer Fläche der Wand an dem Ausgang der Öffnung angeordnet ist, das relativ zu der Öffnung zwischen zwei Positionen bewegbar ist, einer Position zum Verschließen der Öffnung und einer Position zum Durchlassen des Luftflusses, **dadurch gekennzeichnet, dass** sie Mittel zum Antreiben des Ventils umfasst, die mit Mitteln zum Führen ihrer Bewegung verknüpft sind, umfassend eine Zone zum Kippen zwischen zwei stabilen Anschlagpositionen, die den zwei Positionen zum Verschließen der Öffnung und zum Durchlassen des Luftflusses entsprechen, und dass die Antriebsmittel mindestens zwei flexible Drähte aus einer Formgedächtnislegierung umfassen, wobei die Drähte sich zusammenziehen, wenn sie erhitzt werden, und sich bei einem Kühlen ausdehnen, wobei mindestens ein erster Draht zwischen einer Seite des Ventils und der Wand oder einem Element befestigt ist, das an der Wand festgemacht ist, und mindestens ein zweiter Draht zwischen der anderen Seite des Ventils und der Wand oder einem Element befestigt ist, das an der Wand festgemacht ist, wobei mindestens der erste Draht auf das Ventil eine Wirkung in entgegengesetzter Richtung zu der Wirkung ausübt, die durch mindestens den zweiten Draht ausgeübt wird, wobei jeder Draht Heizmitteln ausgesetzt ist, die an eine elektronische Steuereinheit angeschlossen sind, die geeignet ist, um die Heizmittel mindestens des ersten Drahts oder die Heizmittel mindestens des zweiten Drahts abwechselnd zu aktivieren.

2. Ventilvorrichtung zum Steuern des Luftdurchlasses in einer Öffnung nach dem vorstehenden Anspruch, **dadurch gekennzeichnet, dass** die Zusammenziehung des oder der Drähte, die auf einer Seite des Ventils befestigt sind, geeignet ist, um dieses letztere aus seiner Anschlagsposition auf der gegenüberliegenden Seite des Ventils bis zu mindestens einem Kreuzungspunkt der Kippzone anzutreiben.

3. Ventilvorrichtung zum Steuern des Luftdurchlasses in einer Öffnung nach einem der vorstehenden Ansprüche, **dadurch gekennzeichnet, dass** die elektronische Steuereinheit umfasst:
- eine Gleichstromversorgung, die über Schaltmittel an die Drähte aus Formgedächtnislegierung angeschlossen ist, die Schaltmittel umfassend mindestens einen offenen Zustand, einen Verbindungszustand der Stromversorgung mit mindestens dem ersten Draht und einen Verbindungszustand der Stromversorgung mit mindestens dem zweiten Draht, und
- Mittel zum Lenken des Zustands der Schaltmittel,
wobei der Stromdurchlass in den Drähten die Heizmittel bildet.

4. Ventilvorrichtung zum Steuern des Luftdurchlasses in einer Öffnung nach einem der vorstehenden Ansprüche, **dadurch gekennzeichnet, dass** die elektronische Steuereinheit an mindestens einen Sensor angeschlossen ist, der die Veränderung eines Parameters erfasst, der zum Steuern des Ventils verwendet wird.

5. Ventilvorrichtung zum Regulieren der Luftströmung in einer Öffnung nach einem der vorstehenden Ansprüche, **dadurch gekennzeichnet, dass** die Ventilführungsmittel zwei Anschläge umfassen, die die Bewegungsamplitude begrenzen.

6. Ventilvorrichtung zum Regulieren der Luftströmung in einer Öffnung nach dem vorstehenden Anspruch, **dadurch gekennzeichnet, dass** sie Mittel zum Einstellen der Position von mindestens einem der Anschläge umfasst.

7. Ventilvorrichtung zum Regulieren der Luftströmung in einer Öffnung nach einem der vorstehenden Ansprüche, **dadurch gekennzeichnet, dass** das Ventil eine starre Halterung umfasst, die mit einer Folie mit Abmessungen zusammenwirkt, die geeignet sind, um die Öffnung in der Wand zu verschließen, wobei die Folie unabhängig von der Halterung zwischen einer Position in Kontakt mit der Halterung und einer Verschlussposition der Öffnung bewegbar ist.

8. Ventilvorrichtung zum Steuern des Luftdurchlasses in einer Öffnung nach dem vorstehenden Anspruch, **dadurch gekennzeichnet, dass** die Folie aus flexiblem Material hergestellt ist.

## Claims

1. Valve device for regulating the air flow in an air passage opening formed in a wall, comprising a valve arranged on one face of the wall at the outlet of the opening, which valve is movable between two positions relative to the opening, namely a position for closing the opening and an air flow passage position, **characterized in that** it comprises valve drive means associated with means for guiding its displacement, which guide means comprise a rocker zone between two stable stop positions corresponding to the two positions, namely the position for closing the opening and the air flow passage position, **and in that** said drive means comprise at least two flexible wires made of a shape-memory alloy, said wires contracting when heated and expanding when cooling, at least a first wire being fixed between one side of the valve and the wall or an element rigidly connected to the wall and at least a second wire being fixed between the other side of the valve and the wall or an element rigidly connected to the wall, at least the first wire exerting on the valve an action in the opposite direction to the action exerted by at least the second wire, each wire being subjected to heating means connected to an electronic control unit capable of alternately activating the heating means of at least the first wire or the heating means of at least the second wire.

2. Valve device for controlling the passage of air through an opening according to the preceding claim, **characterized in that** the contraction of the wire or wires fixed to one side of the valve is capable of driving the latter from its stop position on the opposite side of the valve to at least one point where the rocker zone is crossed.

3. Valve device for controlling the passage of air through an opening according to any of the preceding claims, **characterized in that** the electronic control unit comprises:
- a DC power supply connected to the shape-memory alloy wires via switching means, said switching means having at least an open state, a state of connection between the power supply and at least the first wire, and a state of connection between the power supply and at least the second wire, and
- means for controlling the state of the switching means,
the passage of current through the wires constituting the heating means.

4. Valve device for controlling the passage of air through an opening according to any of the preceding claims, **characterized in that** the electronic control unit is connected to at least one sensor detecting the evolution of a parameter used to control the valve.

5. Valve device for regulating the air flow in an opening according to any of the preceding claims, **characterized in that** the valve guide means comprise two stops delimiting the amplitude of the displacement.

6. Valve device for regulating the air flow in an opening according to the preceding claim, **characterized in that** it comprises means for adjusting the position of at least one of the stops.

7. Valve device for regulating the air flow in an opening according to any of the preceding claims, **characterized in that** said valve comprises a rigid support cooperating with a film that has dimensions capable of obstructing the opening in the wall, said film being displaceable independently of said support between a position in contact with the support and a position for obstructing the opening.

8. Valve device for controlling the passage of air through an opening according to the preceding claim, **characterized in that** the film is made of flexible material.
